# FASCICULE DE BREVET EUROPEEN

(11) **EP 4 649 017 B1**
(45) Date de publication et mention de la délivrance du brevet: **14.10.2026**
(21) Numéro de dépôt: 24702826.9
(22) Date de dépôt: 08.01.2024
(51) Int. Cl.: B64F 5/60, G01M 13/00, G01M 15/14, F01D 5/00, F01D 5/06, F01D 25/28, F16L 23/00

(54) **OUTILLAGE ET PROCEDE DE CONTROLE VISUEL D'UNE PIECE DE TURBOMACHINE D'AERONEF**
WERKZEUG UND VERFAHREN ZUR VISUELLEN INSPEKTION EINES TEILS EINER FLUGZEUGTURBOMASCHINE
TOOLING AND METHOD FOR VISUALLY INSPECTING AN AIRCRAFT TURBOMACHINE PART

(30) Priorité: 12.01.2023 FR 2300314
(43) Date de publication de la demande: 19.11.2025
(73) Titulaire: SAFRAN AIRCRAFT ENGINES, 75015 Paris (FR)
(72) Inventeur: GAUDUCHON, Thomas Laurent Frédéric, 77550 MOISSY-CRAMAYEL (FR); LECOMTE, Joris Jean-Emmanuel Johann, 77550 MOISSY-CRAMAYEL (FR); SATRE, Antoine Frédéric Jean, 77550 MOISSY-CRAMAYEL (FR)
(74) Mandataire: Gevers & Orès
(86) Numéro de dépôt international: PCT/FR2024/050016
(87) Numéro de publication internationale: WO 2024/149953

(56) Documents cités:
- FR-A1- 2 973 110
- US-A- 4 507 869
- US-A1- 2022 268 563

## Description

### Domaine technique de l'invention

La présente invention concerne un outillage et un procédé de contrôle visuel d'une pièce de turbomachine d'aéronef.

### Arrière-plan technique

L'arrière-plan technique comprend des documents ayant des enseignements éloignés tels que US-A-4507 869.

Il existe plusieurs techniques de contrôle d'une pièce de turbomachine d'aéronef, la présente invention concernant un contrôle visuel c'est-à-dire un contrôle réalisé par un opérateur ou technicien spécialisé. Ce type de contrôle peut être réalisé après la fabrication de la pièce ou au cours d'une opération de maintenance de la pièce ou de la turbomachine comportant cette pièce. Lors d'un contrôle visuel d'une pièce, l'opérateur doit chercher s'il y a des défauts éventuels sur la pièce, c'est-à-dire des marques ou des usures. En fonction de plusieurs critères, tels que le type de marques ou usures, les dimensions de celles-ci, la position de celles-ci, etc., l'opérateur doit déterminer si ces marques ou usures sont acceptables ou non. En l'absence de marques ou usures sur une pièce, cette pièce pourrait être utilisée ou réutilisée dans une turbomachine. En présence de marques ou usures sur une pièce, celle-ci pourrait être mise au rebut ou subir une opération de rectification.

La présente invention s'intéresse au contrôle d'une pièce annulaire, c'est-à-dire une pièce qui a une forme annulaire autour d'un axe. Cette pièce comporte une bride annulaire de fixation qui est orientée en direction radiale vis-à-vis de l'axe. Une bride de fixation est festonnée ou non festonnée et comprend en général une série d'orifices axiaux de passage d'éléments de fixation du type vis-écrou ou analogues.

Cette pièce annulaire équipée d'une bride radiale peut former par exemple un tourillon, un carter, un capot, une virole, une paroi, un disque, etc., dans la turbomachine.

Le document FR2973110-A1 divulgue un exemple d'outillage utilisé pour le contrôle visuel d'un carter de turbomachine d'aéronef.

La présente invention a pour but d'apporter une solution permettant de contrôler visuellement de manière simple, efficace et économique une pièce annulaire de ce type.

### Résumé de l'invention

L'invention concerne un outillage de contrôle visuel d'une pièce de turbomachine d'aéronef, cette pièce ayant une forme annulaire autour d'un axe et comportant une bride annulaire de fixation qui est orientée en direction radiale vis-à-vis de l'axe, l'outillage comportant un corps formé d'une seule pièce et comprenant :
- un crochet en U configuré pour être monté sur ladite bride, ce crochet comportant deux branches latérales configurées pour être situées respectivement des deux côtés de la bride, et
- un cadre relié au crochet et configuré pour recouvrir une partie à contrôler de la pièce, ce cadre définissant une fenêtre à travers laquelle un opérateur peut visualiser une portion de ladite partie.

L'invention propose ainsi un outillage simple et facile d'utilisation qui comprend pour l'essentiel deux parties, à savoir un crochet et un cadre. Le crochet sert au montage de l'outillage sur la pièce à contrôler, ce crochet étant destiné à coopérer avec la bride de cette pièce. La bride étant sujette à des défauts, un des avantages du crochet est qu'il permet de cacher les défauts sur la bride et donc de pouvoir indiquer que les défauts (préalablement détectés par l'opérateur) dans cette zone sont situés sur la bride, ce qui peut être problématique. Le cadre recouvre une partie de la pièce et sa fenêtre permet à l'opérateur de voir une partie de la pièce à travers l'outillage. Contrairement au crochet qui cache les défauts sur la bride, les défauts éventuels présents sur le reste de la pièce (en dehors de sa bride) sont soit visibles à travers la fenêtre soit cachés par le cadre. Selon la position des défauts, ceux-ci sont cachés par l'outillage ou visibles à travers l'outillage. L'outillage permet donc de faire apparaitre ou de cacher les défauts. Plus particulièrement, l'outillage permet de positionner avec précision les défauts afin d'en déterminer leur criticité pour la pièce.

L'outillage selon l'invention est avantageusement adapté pour être utilisable sur des pièces de formes et dimensions différentes. Par ailleurs, il peut être facilement mobile autour d'une pièce et d'une pièce à l'autre, grâce à sa simplicité et à sa légèreté.

L'outillage selon l'invention peut comprendre une ou plusieurs des caractéristiques suivantes, prises seules ou en combinaison les unes avec les autres :
- le crochet en U a une forme générale incurvée et a une courbure configurée pour être similaire à celle de ladite bride ;
- les deux branches du crochet sont reliées entre elles par un pont qui a une forme générale incurvée et qui est configuré pour prendre appui radialement sur la bride ;
- au moins l'une desdites branches comporte une saillie d'appui configurée pour venir en appui sur un côté de la bride ;
- le cadre comporte une saillie d'appui configurée pour venir en appui sur ladite partie de la pièce ;
- le cadre a une forme générale incurvée ;
- le cadre est incliné par rapport au crochet ;
- le cadre comprend deux profilés incurvés, respectivement interne et externe, dont les extrémités circonférentielles sont reliées entre elles par des montants latéraux, ces profilés et montants délimitant entre eux ladite fenêtre ;
- le profilé interne a une dimension, en particulier radiale, supérieure à celle du profilé externe, et supérieure à une épaisseur circonférentielle de chacun des montants latéraux ;
- le cadre comprend au moins un bord, en particulier du côté intérieur à ladite fenêtre, formant une règle de traçage sur la pièce ;
   -- ledit au moins un bord est choisi parmi un bord externe du profilé interne, un bord interne du profilé externe, et un bord latéral de chacun des montants latéraux ;
- le corps a une forme générale incurvée et une étendue angulaire comprise entre 10 et 30° autour d'un axe, qui est configuré pour être confondu avec l'axe de la pièce ;
   -- le corps est réalisé en matériau plastique, tel qu'en TPU par exemple.

La présente invention concerne également un procédé de contrôle visuel d'une pièce de turbomachine d'aéronef, au moyen d'un outillage tel que décrit ci-dessus, la pièce ayant une forme annulaire autour d'un axe et comportant une bride annulaire de fixation qui est orientée en direction radiale vis-à-vis de l'axe, le procédé comprenant les étapes consistant à :
a) positionner le corps de l'outillage sur la pièce en montant le crochet sur la bride, les deux branches latérales du crochet étant situées respectivement des deux côtés de la bride, et
b) contrôler la pièce, et en particulier la partie de la pièce sur laquelle est montée le corps, cette étape de contrôle étant réalisée par un opérateur.

Le procédé selon l'invention peut comprendre une ou plusieurs des caractéristiques ou étapes suivantes, prises seules ou en combinaison les unes avec les autres :
- la pièce est un tourillon qui comprend une paroi tronconique, et ladite bride est orientée radialement vers l'extérieur et située à la périphérie externe de la paroi tronconique, le corps de l'outillage étant positionné à l'étape a) de sorte que son cadre soit montée sur une partie d'une surface tronconique externe de cette paroi tronconique ;
   -- le crochet pince axialement la bride à l'issue de l'étape a), le cadre étant en appui ou à distance de la pièce ;
   -- le crochet est en appui radial sur la bride à l'issue de l'étape a) ;
- l'étape b) comprend les sous-étapes de :
   + vérification par l'opérateur s'il y a des marques ou usures qui sont situées sur la pièce et qui sont cachées par le corps de l'outillage, et
   + vérification par l'opérateur s'il y a des marques ou usures qui sont visibles à travers la fenêtre de l'outillage ;

   -- plus particulièrement, l'étape b) comprend les sous-étapes de :
      + vérification par l'opérateur s'il y a des marques ou usures qui sont situées sur la pièce et qui sont cachées par le cadre, et en particulier par son profilé interne,
      + vérification par l'opérateur s'il y a des marques ou usures qui sont situées sur la pièce et qui sont cachées par le crochet,
      + vérification par l'opérateur s'il y a des marques ou usures qui sont visibles à travers la fenêtre ;
- au moins un trait est tracé sur la pièce le long d'un des bords du cadre ;
- après les étapes a) et b), le procédé comprend une étape c) de déplacement du corps de l'outillage sur la pièce, par rotation du corps monté sur la pièce autour de l'axe de la pièce, puis l'étape b) est répétée ;
- les étapes b) et c) sont répétées autant de fois que nécessaire de façon à contrôler tout le contour de la pièce ;
   -- la bride est festonnée et/ou comprend des orifices axiaux de passage d'éléments de fixation du type vis-écrou par exemple.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue schématique partielle en perspective d'une pièce annulaire à contrôler d'une turbomachine d'aéronef ;
[Fig. 2] la figure 2 est une vue à plus grande échelle d'une partie de la figure 1
[Fig. 3] la figure 3 est une vue en coupe axiale de la pièce de la figure 1 ;
[Fig. 4] la figure 4 est une vue similaire à celle de la figure 2 et montre un outillage de contrôle selon un mode de réalisation de l'invention, qui est monté sur la pièce à contrôler ;
[Fig. 5] la figure 5 est une vue en coupe selon la ligne V-V de la figure 4 ;
[Fig. 6] la figure 6 est une vue à plus grande échelle d'un détail de la figure 5 ;
[Fig. 7] la figure 7 est une vue à plus grande échelle d'un autre détail de la figure 5 ; et
[Fig. 8] la figure 8 est une vue similaire à celle de la figure 4 et illustrant un procédé de contrôle selon l'invention.

### Description détaillée de l'invention

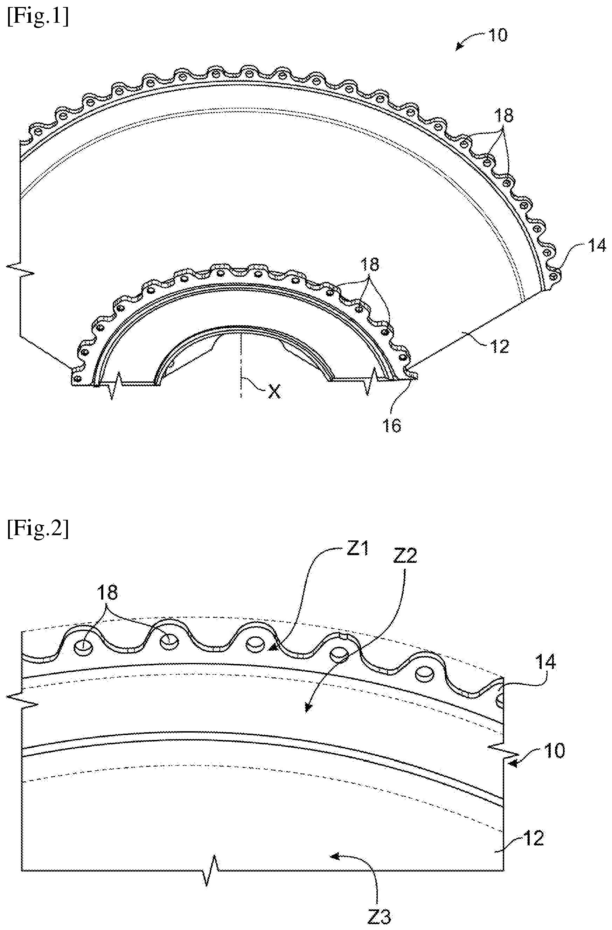

La figure 1 montre une pièce 10 pour une turbomachine d'aéronef.

Cette pièce 10 a une forme annulaire autour d'un axe X qui est en général l'axe longitudinal de la turbomachine.

Dans l'exemple représenté, la pièce 10 est un tourillon bien que cet exemple ne soit pas limitatif.

La pièce 10 comprend une paroi annulaire 12 et une bride annulaire 14 qui s'étend en direction radiale vis-à-vis de l'axe X et qui est situé à la périphérie externe de la paroi 12 dans l'exemple représenté.

La figure 1 montre par ailleurs que la pièce 10 comprend une autre bride annulaire 16 qui s'étend en direction radiale depuis la périphérie interne de la paroi 12.

Dans l'exemple représenté, la paroi 12 est pleine et est donc dépourvue d'orifices ou lumières bien que cet aspect ne soit pas limitatif. La bride 14 ainsi que l'autre bride 16 sont festonnées mais pourraient en variante être non festonnées.

Par ailleurs, dans l'exemple représenté, la paroi 12 a une forme tronconique. Les brides 14, 16 comprennent des orifices axiaux 18 de passage d'éléments de fixation du type vis-écrou ou analogues. Chacun des festons comprend un orifice 18 dans l'exemple représenté. Les orifices 18 de chaque bride 14, 16 sont régulièrement répartis autour de l'axe X.

La figure 2 est une vue à plus grande échelle d'un détail de la figure 1 et montre trois zones annulaires distinctes Z1, Z2, Z3 de contrôle de la pièce 10.

La zone Z1 est située au niveau de la bride 14. Toutes marques ou usures dans cette zone Z1 n'est pas acceptable pour la pièce 10. Il est donc important que la pièce 10 soit dépourvue de tels défauts dans cette zone Z1.

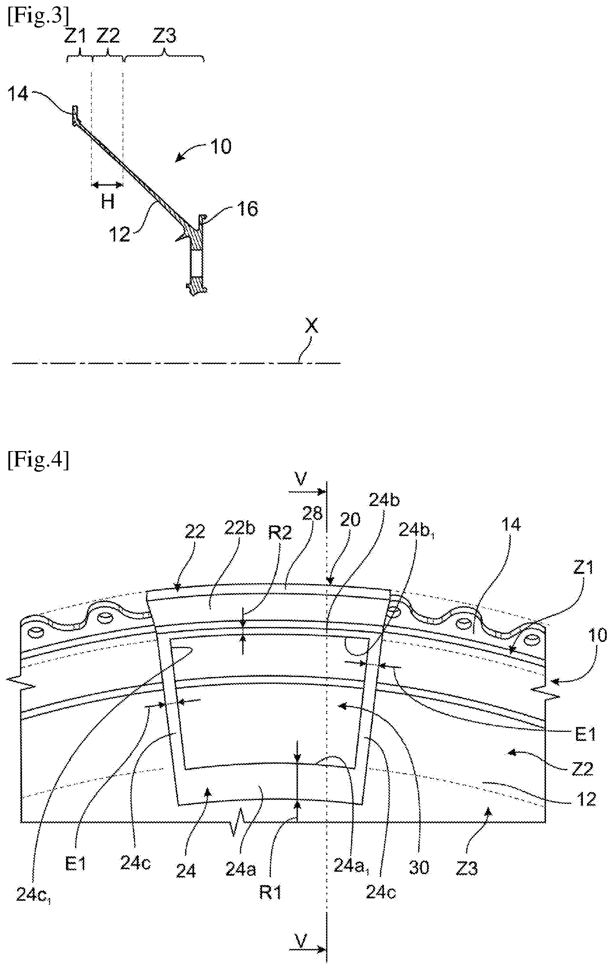

La zone Z2 s'étend depuis la zone Z1 vers la zone Z3 et a une dimension axiale H prédéterminée, mesurée depuis la bride 14 (cf. figure 3). Toutes marques ou usures dans cette zone Z2 est potentiellement problématique pour la pièce 10. Il est donc important de pouvoir détecter tout défaut dans cette zone Z2 afin de pouvoir mieux caractériser ce défaut, et par exemple mesurer ses dimensions.

La zone Z3 s'étend entre la zone Z2 et la périphérie interne de la pièce 10. Toutes marques ou usures dans cette zone Z3 est moins problématique pour la pièce 10. Il est donc important de pouvoir bien localiser un défaut entre cette zone Z3 et la zone Z2 située juste autour.

L'outillage selon l'invention permet de contrôler ce type de pièce 10 et de faciliter la localisation d'éventuels défauts dans les différentes zones Z1, Z2 et Z3.

Les figures 4 à 8 illustrent un mode de réalisation de cet outillage 20.

L'outillage 20 comporte un corps formé d'une seule pièce. Cet outillage 20 est destiné à être monté sur la pièce 10 à contrôler et est de préférence réalisé dans un matériau qui n'est pas susceptible d'abîmer la pièce 10 par choc ou frottement.

Le corps de l'outillage 20 est avantageusement réalisé en matière plastique tel qu'en TPU (polyuréthane thermoplastique). Il peut être réalisé par fabrication additive. La pièce 10 à contrôler est en général en alliage métallique Le corps de l'outillage 20 comprend pour l'essentiel deux parties à savoir un crochet 22 et un cadre 24.

Dans l'exemple représenté, le corps de l'outillage 20 a une forme générale incurvée autour de l'axe X lorsqu'il est monté sur la bride 14.

Le corps a par exemple une étendue angulaire comprise entre 10 et 30° autour de l'axe X, lorsque le corps est monté sur la pièce 10.

Le crochet 22 est un crochet en U qui est configuré pour être monté sur la bride 14, comme cela est visible aux figures 4 à 6 par exemple.

Le crochet 22 comporte deux branches latérales 22a, 22b configurées pour être situées axialement de chaque côté de la bride 14.

Dans l'exemple représenté, le crochet 22 a une forme générale incurvée et chacune de ses branches 22a, 22b a une forme incurvée autour de l'axe X. Chacune des branches 22a, 22b a une orientation radiale vis-à-vis de l'axe X et est relativement plane.

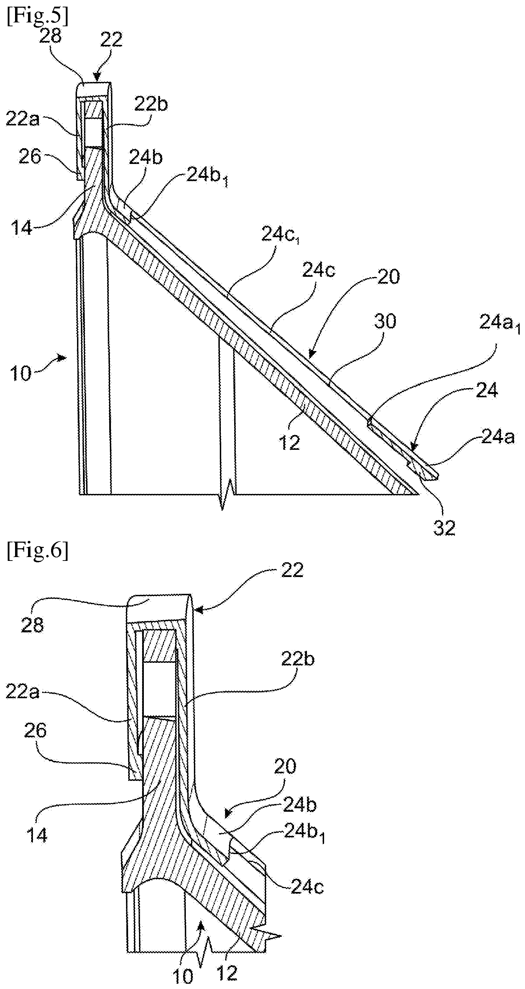

Comme on le voit à la figure 6, au moins l'une des branches 22a, 22b peut comprendre une saillie d'appui 26 configurée pour venir en appui sur un côté de la bride 14.

La saillie 26 a par exemple une hauteur comprise entre 0,5 et 3mm, et de préférence de l'ordre de 0,5-1mm.

Le crochet 22 est avantageusement configuré pour pincer axialement la bride 14, la saillie 26 permettant de limiter la surface d'appui de la branche 22a sur la bride 14 et de limiter le risque de détérioration de la bride 14 et de la pièce 10. Par ailleurs, le fait de localiser l'appui de la branche 22a sur la bride au niveau de la saillie 26 permet de limiter l'épaisseur du reste de la branche 22a et de conférer à cette branche 22a une certaine souplesse en déformation pour que le crochet 22 puisse s'adapter à des pièces 10 différentes et en particulier à des pièces 10 ayant des brides d'épaisseurs axiales différentes. Dans l'exemple représenté, la saillie 26 est située sur la périphérie interne de la branche 22a. Cette saillie 26 peut s'étendre sur toute l'étendue circonférentielle du corps.

Une saillie d'appui similaire pourrait à la place ou en plus être située sur la branche 22b, pour venir au contact de l'autre côté de la bride 14.

Les deux branches 22a, 22b du crochet 22 sont reliées entre elles par un pont 28 qui a une forme générale incurvée et qui est configuré pour prendre appui radialement sur la bride 14, comme cela est visible aux figures 4 et 6 notamment. On comprend donc que le crochet 22 a une courbure similaire à celle de la bride 14 dans l'exemple représenté.

On constate par ailleurs sur la figure 4 que le crochet 22 recouvre la bride 14 et permet donc de cacher tout défaut qui serait présent sur la bride 14 et recouvert par le crochet 22.

Le cadre 24 du corps de l'outillage est relié au crochet 22, et en particulier à sa branche 22b, et est configuré être monté sur une autre partie à contrôler de la pièce 10.

Dans l'exemple représenté, le cadre 24 est incliné par rapport au crochet 22. Cette inclinaison lui permet de suivre la forme tronconique de la paroi 12.

Le cadre 24 définit une fenêtre 30 à travers laquelle un opérateur peut visualiser une portion de la partie à contrôler de la pièce 10.

Le cadre 24 peut également comporter une saillie d'appui 32 configurée pour venir en appui sur la partie à contrôler de la pièce 10. Toutefois, comme on le voit à la figure 5, cette saillie 32 n'est pas forcément en appui sur la pièce 10 et peut être à distance de la pièce. On constate d'ailleurs dans cette figure que l'intégralité du cadre 24 peut être écartée de la pièce lorsque le corps de l'outillage est monté sur la pièce.

Dans l'exemple représenté, la saillie 32 est située sur la périphérie interne de du cadre 24. Cette saillie 32 peut s'étendre sur toute l'étendue circonférentielle du corps.

La saillie 32 a par exemple une hauteur comprise entre 0,5 et 3mm, et de préférence de l'ordre de 0,5-1mm.

Le cadre 24 comprend ici deux profilés incurvés, respectivement interne 24a et externe 24b, dont les extrémités circonférentielles sont reliées entre elles par des montants latéraux 24c. Ces profilés 24a, 24b et montants 24c définissent entre eux la fenêtre 30.

Dans l'exemple représenté, le profilé interne 24a a une dimension, en particulier, R1 supérieure à celle R2 du profilé externe 24b, et supérieure à une épaisseur circonférentielle E1 de chacun des montants latéraux 24c.

Le profilé externe 24b est configuré pour recouvrir le reste de la zone Z1 qui n'est pas recouverte par le crochet 22. Autrement dit, le crochet 22 et le profilé externe 24b du cadre 24 recouvrent ensemble la zone Z1 de la pièce 10, ou du moins un secteur de cette zone Z1, comme illustré à la figure 4.

Le profilé interne 24a est configuré pour recouvrir une partie de la zone Z3. On comprend donc que la fenêtre 30 qui s'étend entre les profilés 24a, 24b est située au niveau de la zone Z2 et permet donc à un opérateur de visualiser et de contrôler cette zone Z2 ou du moins un secteur de cette zone Z2.

Le profilé interne 24a peut comprendre un bord externe 24a1 formant une règle de traçage sur la pièce 10. En variante ou en caractéristique additionnelle, le profilé externe 24b peut comprendre un bord interne 24b1 formant une règle de traçage sur la pièce 10. Les montants 24c peuvent également comprendre chacun un bord latéral 24c1 formant une règle de traçage sur la pièce 10.

L'invention concerne aussi un procédé de contrôle visuel de la pièce 10 au moyen de l'outillage 20 tel que décrit dans ce qui précède.

Le procédé comprend les étapes consistant à :
a) positionner le corps de l'outillage 20 sur la pièce 10 en montant le crochet 22 sur la bride 14, les deux branches latérales 22a, 22b du crochet 22 étant situées respectivement des deux côtés de la bride 14, et
b) contrôler la pièce 10, et en particulier la partie de la pièce 10 sur laquelle est monté le corps, cette étape de contrôle étant réalisée par un opérateur.

En ce qui concerne l'étape a), le corps de l'outillage 20 est de préférence positionné de sorte que le crochet 22 pince axialement la bride 14 et soit en appui radial sur la bride 14. En position de montage, le cadre 24 peut être en appui ou à distance de la pièce 10 comme illustré à la figure 5.

La partie de la pièce 10 sur laquelle est monté le corps de l'outillage 20 comprend :
- la zone Z1, ou du moins un secteur de cette zone Z1, recouverte par le crochet 22 et le profilé externe 24b du cadre, et qui est donc cachée par ces éléments,
- la zone Z2, ou du moins un secteur de cette zone Z2, visible à travers la fenêtre 30 du cadre 24, et
- la zone Z3, ou du moins un secteur ou la partie de cette zone Z3, recouverte par le profilé interne 24a du cadre, et qui est donc cachée par cet élément. On comprend ainsi que l'étape b) peut comprendre les sous-étapes de :
- vérification par l'opérateur s'il y a des marques ou usures qui sont situées sur la pièce 10 et qui sont cachées par le cadre 24, et en particulier par ses profilés 24a, 24b ; les défauts situés derrière le profilé 24a seraient considérés comme étant dans la zone Z3 et donc moins problématiques ; les défauts situés derrière le profilé 24b seraient considérés comme étant dans la zone Z1 et donc problématiques ;
- vérification par l'opérateur s'il y a des marques ou usures qui sont situées sur la pièce 10 et qui sont cachées par le crochet 22 ; les défauts situés derrière le crochet 22 seraient alors considérés comme étant dans la zone Z1 et donc également problématiques ; et
- vérification par l'opérateur s'il y a des marques ou usures qui sont visibles à travers la fenêtre 30 ; ces défauts visibles seraient alors considérés comme étant dans la zone Z2 et donc potentiellement problématiques en fonction de leurs dimensions notamment.

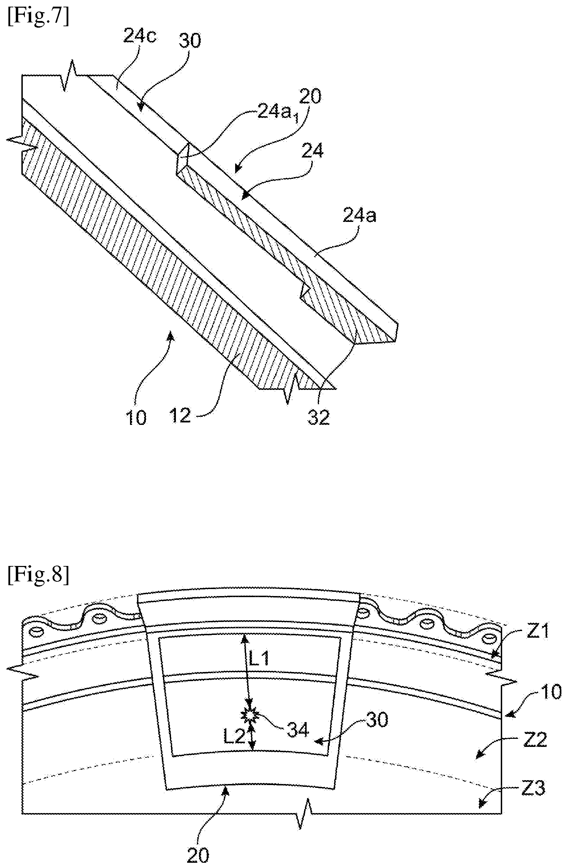

Pour cela, l'opérateur peut par exemple détecter la présence d'un défaut sur la pièce 10 puis monter le corps de l'outillage sur la pièce 10 pour déterminer si ce défaut est ou non caché par l'outillage 20 ou visible à travers sa fenêtre 30. Cela permet de déterminer rapidement le niveau de conformité du défaut. Dans l'exemple représenté à la figure 8, un défaut 34 est visible à travers la fenêtre et sa position est mesurée par l'opérateur à une distance L1 du bord 24b1 et à une distance L2 du bord 24a1. Il en conclut donc que ce défaut est situé dans la zone Z2.

Une autre façon de procéder consisterait à monter le corps de l'outillage sur la pièce 10 puis à tracer des traits le long des bords 24a1, 24b1 du cadre 24. Après le retrait de l'outillage 20, l'opérateur pourrait alors déterminer où se situe un défaut éventuel par rapport à ces traçages.

A l'étape c), le procédé peut comprendre une étape c) de déplacement du corps de l'outillage 20 sur la pièce 10, par rotation du corps monté sur la pièce 10 autour de l'axe X.

Les étapes du procédé a) et/ou b) peuvent être répétées après cette étape c). Les étapes a), b) et/ou c) peuvent être répétées autant de fois que nécessaire de façon à contrôler tout le contour de la pièce 10.

Un même outillage 20 peut être utilisé pour contrôler plusieurs pièces 10, y compris des pièces 10 de formes et/ou dimensions différentes. Ceci est par exemple rendu possible grâce à la souplesse précitée du crochet 22 et au fait qu'il n'est pas nécessaire que le cadre 24 de l'outillage 20 soit en appui sur la pièce 10 pour pouvoir la contrôler.

Cette solution permet notamment :
- de simplifier le contrôle par les opérateurs ; ils n'auront en effet plus à se préoccuper de savoir comment prendre les mesures ; en effet, avec l'outillage 20, l'opérateur pourra par exemple tracer des traits et mesurer la position d'un défaut par rapport à ces traits ;
- de garantir que le contrôle demandé sera conforme et identique à tous les opérateurs ;
- d'éviter les erreurs ;
- de rendre plus visuel le contrôle demandé, etc.

## Revendications

1. Outillage (20) de contrôle visuel d'une pièce (10) de turbomachine d'aéronef, cette pièce (10) ayant une forme annulaire autour d'un axe (X) et comportant une bride annulaire de fixation (14) qui est orientée en direction radiale vis-à-vis de l'axe (X), l'outillage (20) comportant un corps formé d'une seule pièce et comprenant :
- un crochet en U (22) configuré pour être monté sur ladite bride (14), le crochet (22) en U ayant une forme générale incurvée et ayant une courbure configurée pour être similaire à celle de ladite bride (14), ce crochet (22) comportant deux branches latérales (22a, 22b) configurées pour être situées respectivement des deux côtés de la bride (14), et
- un cadre (24) relié au crochet (22) et configuré pour recouvrir une partie à contrôler de la pièce (10), ce cadre (24) définissant une fenêtre (30) à travers laquelle un opérateur peut visualiser une portion de ladite partie.

2. Outillage (20) selon la revendication 1, dans lequel les deux branches (22a, 22b) du crochet (22) sont reliées entre elles par un pont (28) qui a une forme générale incurvée et qui est configuré pour prendre appui radialement sur la bride (14).

3. Outillage (20) selon l'une des revendications précédentes, dans lequel au moins l'une desdites branches (22a, 22b) comporte une saillie d'appui (26) configurée pour venir en appui sur un côté de la bride (14).

4. Outillage (20) selon l'une des revendications précédentes, dans lequel le cadre (24) comporte une saillie d'appui (32) configurée pour venir en appui sur ladite partie de la pièce (10).

5. Outillage (20) selon l'une des revendications précédentes, dans lequel le cadre (24) est incliné par rapport au crochet (22).

6. Outillage (20) selon l'une des revendications précédentes, dans lequel le cadre (24) comprend deux profilés incurvés, respectivement interne (24a) et externe (24b) dont les extrémités circonférentielles sont reliées entre elles par des montants latéraux (24c), ces profilés (24a, 24b) et montants (24c) délimitant entre eux ladite fenêtre (30).

7. Outillage (20) selon la revendication 6, dans lequel le profilé interne (24a) a une dimension (R1) supérieure à celle (R2) du profilé externe (24b), et supérieure à une épaisseur circonférentielle (E1) de chacun des montants latéraux (24c).

8. Outillage (20) selon l'une des revendications précédentes, dans lequel le cadre (24) comprend au moins un bord (24a1, 24b1, 24c1) formant une règle de traçage sur la pièce (10).

9. Outillage (20) selon l'une des revendications précédentes, dans lequel le corps a une forme générale incurvée et une étendue angulaire comprise entre 10 et 30° autour d'un axe, qui est configuré pour être confondu avec l'axe (X) de la pièce (10).

10. Procédé de contrôle visuel d'une pièce (10) de turbomachine d'aéronef, au moyen d'un outillage (20) selon l'une des revendications précédentes, la pièce (10) ayant une forme annulaire autour d'un axe (X) et comportant une bride annulaire de fixation (14) qui est orientée en direction radiale vis-à-vis de l'axe, le procédé comprenant les étapes consistant à :
a) positionner le corps de l'outillage (20) sur la pièce (10) en montant le crochet (22) sur la bride (14), les deux branches latérales (22a, 22b) du crochet (22) étant situées respectivement des deux côtés de la bride (14), et
b) contrôler la pièce (10), et en particulier la partie de la pièce (10) sur laquelle est montée le corps, cette étape de contrôle étant réalisée par un opérateur.

11. Procédé selon la revendication 10, dans lequel la pièce (10) est un tourillon qui comprend une paroi tronconique (12), et ladite bride (14) est orientée radialement vers l'extérieur et située à la périphérie externe de la paroi tronconique (12), le corps de l'outillage (20) étant positionné à l'étape a) de sorte que son cadre (24) soit montée sur une partie d'une surface tronconique externe de cette paroi tronconique (12).

12. Procédé selon la revendication 10 ou 11, dans lequel l'étape b) comprend les sous-étapes de :
- vérification par l'opérateur s'il y a des marques ou usures qui sont situées sur la pièce (10) et qui sont cachées par le corps de l'outillage (20), et
- vérification par l'opérateur s'il y a des marques ou usures qui sont visibles à travers la fenêtre (30) de l'outillage (20).

13. Procédé selon l'une des revendications 10 à 12, l'outillage (20) étant du type tel que défini à la revendication 9, dans lequel au moins un trait est tracé sur la pièce (10) le long d'un des bords (24a1, 24b1) du cadre (24).

14. Procédé selon l'une des revendications 10 à 13, dans lequel, après les étapes a) et b), le procédé comprend une étape c) de déplacement du corps de l'outillage (20) sur la pièce (10), par rotation du corps monté sur la pièce (10) autour de l'axe (X) de la pièce, puis l'étape b) du procédé est répétée.

15. Procédé selon la revendication 14, dans lequel les étapes b) et c) sont répétées autant de fois que nécessaire de façon à contrôler tout le contour de la pièce (10).

## Patentansprüche

1. Werkzeug (20) zur visuellen Inspektion eines Werkstücks (10) eines Flugzeugturbotriebwerks, wobei dieses Werkstück (10) eine ringförmige Form um eine Achse (X) herum aufweist und einen ringförmigen Befestigungsflansch (14) umfasst, der in Bezug auf die Achse (X) in radialer Richtung ausgerichtet ist, wobei das Werkzeug (20) einen einstückig gebildeten Körper umfasst und Folgendes umfasst:
- einen U-förmigen Haken (22), der ausgelegt ist, um am Flansch (14) angebracht zu werden, wobei der U-förmige Haken (22) eine allgemeine gekrümmte Form aufweist und eine Krümmung aufweist, die ausgelegt ist, um jener des Flansches (14) ähnlich zu sein, wobei dieser Haken (22) zwei Seitenzweige (22a, 22b) umfasst, die ausgelegt sind, um sich jeweils an den zwei Seiten des Flansches (14) zu befinden, und
- einen Rahmen (24), der mit dem Haken (22) verbunden ist und ausgelegt ist, um einen zu inspizierenden Teil des Werkstücks (10) abzudecken, wobei dieser Rahmen (24) ein Fenster (30) definiert, durch das ein Bediener einen Abschnitt des Teils inspizieren kann.

2. Werkzeug (20) nach Anspruch 1, wobei die zwei Zweige (22a, 22b) des Hakens (22) über eine Brücke (28), die eine allgemeine gekrümmte Form aufweist und die ausgelegt ist, um radial auf dem Flansch (14) aufzuliegen, miteinander verbunden sind.

3. Werkzeug (20) nach einem der vorstehenden Ansprüche, wobei mindestens einer der Zweige (22a, 22b) einen Stützvorsprung (26) umfasst, der ausgelegt ist, um an einer Seite des Flansches (14) aufzuliegen.

4. Werkzeug (20) nach einem der vorstehenden Ansprüche, wobei der Rahmen (24) einen Stützvorsprung (32) umfasst, der ausgelegt ist, um auf dem Teil des Werkstücks (10) aufzuliegen.

5. Werkzeug (20) nach einem der vorstehenden Ansprüche, wobei der Rahmen (24) in Bezug auf den Haken (22) geneigt ist.

6. Werkzeug (20) nach einem der vorstehenden Ansprüche, wobei der Rahmen (24) zwei gekrümmte Profile umfasst, ein inneres (24a) und ein äußeres (24b), deren Umfangsenden durch Seitenstützen (24c) miteinander verbunden sind, wobei diese Profile (24a, 24b) und Stützen (24c) untereinander das Fenster (30) begrenzen.

7. Werkzeug (20) nach Anspruch 6, wobei das innere Profil (24a) eine Abmessung (R1) aufweist, die größer ist als jene (R2) des äußeren Profils (24b) und größer als eine Umfangsdicke (E1) jeder der Seitenstützen (24c).

8. Werkzeug (20) nach einem der vorstehenden Ansprüche, wobei der Rahmen (24) mindestens eine Kante (24a1, 24b1, 24c1) umfasst, die ein Anreißlineal auf dem Werkstück (10) bildet.

9. Werkzeug (20) nach einem der vorstehenden Ansprüche, wobei der Körper eine allgemeine gekrümmte Form und eine Winkelerstreckung zwischen 10 und 30° um eine Achse herum aufweist, die ausgelegt ist, um mit der Achse (X) des Werkstücks (10) zusammenzufallen.

10. Verfahren zur visuellen Inspektion eines Werkstücks (10) eines Flugzeugturbotriebwerks mithilfe eines Werkzeugs (20) nach einem der vorstehenden Ansprüche, wobei das Werkstück (10) eine ringförmige Form um eine Achse (X) herum aufweist und einen ringförmigen Befestigungsflansch (14) umfasst, der in Bezug auf die Achse (X) in radialer Richtung ausgerichtet ist, wobei das Verfahren die Schritte umfasst, die aus Folgendem bestehen:
a) Positionieren des Körpers des Werkzeugs (20) auf dem Werkstück (10), indem der Haken (22) auf dem Flansch (14) angebracht wird, wobei sich die zwei Seitenzweige (22a, 22b) des Hakens (22) jeweils auf den zwei Seiten des Flansches (14) befinden, und
b) Inspizieren des Werkstücks (10), und insbesondere des Teils des Werkstücks (10), auf dem der Körper angebracht ist, wobei dieser Schritt der Inspektion von einem Bediener durchgeführt wird.

11. Verfahren nach Anspruch 10, wobei das Werkstück (10) ein Zapfen ist, der eine kegelförmige Wand (12) umfasst, und der Flansch (14) radial nach außen ausgerichtet ist und sich am Außenumfang der kegelförmigen Wand (12) befindet, wobei der Körper des Werkzeugs (20) im Schritt a) so positioniert wird, dass sein Rahmen (24) auf einem Teil einer äußeren kegelförmigen Fläche dieser kegelförmigen Wand (12) angebracht wird.

12. Verfahren nach Anspruch 10 oder 11, wobei der Schritt b) die folgenden Teilschritte umfasst:
- Überprüfung, durch den Bediener, ob es Zeichen oder Abnutzungen gibt, die sich auf dem Werkstück (10) befinden und die von dem Körper des Werkzeugs (20) verdeckt werden, und
- Überprüfung, durch den Bediener, ob es Zeichen oder Abnutzungen gibt, die durch das Fenster (30) des Werkstücks (20) hindurch sichtbar sind.

13. Verfahren nach einem der Ansprüche 10 bis 12, wobei das Werkzeug (20) von einem wie in Anspruch 9 definierten Typ ist, wobei mindestens eine Linie auf dem Werkstück (10) entlang einer der Kanten (24a1, 24b1) des Rahmens (24) gezogen wird.

14. Verfahren nach einem der Ansprüche 10 bis 13, wobei das Verfahren nach den Schritten a) und b) einen Schritt c) der Verschiebung des Körpers des Werkzeugs (20) auf dem Werkstück (10) durch Drehung des auf dem Werkstück (10) angebrachten Körpers um die Achse (X) des Werkstücks umfasst, danach wird der Schritt b) des Verfahrens wiederholt.

15. Verfahren nach Anspruch 14, wobei die Schritte b) und c) so oft wie nötig wiederholt werden, um den gesamten Umriss des Werkstücks (10) zu inspizieren.

## Claims

1. A tooling (20) for visual inspecting an aircraft turbomachine part (10), this part (10) having an annular shape about an axis (X) and comprising an annular attachment flange (14) which is oriented in the radial direction with respect to the axis (X), the tooling (20) comprising an integrally formed body and comprising:
- a U-shaped hook (22) configured to be mounted on said flange (14), the U-shaped hook (22) having a generally curved shape and having a curvature configured to be similar to that of said flange (14), this hook (22) comprising two lateral legs (22a, 22b) configured to be located on both sides of the flange (14), respectively, and
- a frame (24) connected to the hook (22) and configured to cover a portion to be inspected of the part (10), this frame (24) defining a window (30) through which an operator can view a segment of said portion.

2. The tooling (20) according to claim 1, wherein the two legs (22a, 22b) of the hook (22) are connected together by a bridge (28) which has a generally curved shape and is configured to bear radially on the flange (14).

3. The tooling (20) according to one of the preceding claims, wherein at least one of said legs (22a, 22b) comprises a bearing projection (26) configured to bear on one side of the flange (14).

4. The tooling (20) according to one of the preceding claims, wherein the frame (24) comprises a bearing projection (32) configured to bear on said portion of the part (10).

5. The tooling (20) according to one of the preceding claims, wherein the frame (24) is inclined with respect to the hook (22).

6. The tooling (20) according to one of the preceding claims, wherein the frame (24) comprises two curved profiles, one internal (24a) and one external (24b) respectively, the circumferential ends of which are connected together by lateral uprights (24c), these profiles (24a, 24b) and uprights (24c) delimiting between them said window (30).

7. The tooling (20) according to claim 6, wherein the internal profile (24a) has a dimension (R1) greater than that (R2) of the external profile (24b), and greater than a circumferential thickness (E1) of each of the lateral uprights (24c).

8. The tooling (20) according to one of the preceding claims, wherein the frame (24) comprises at least one edge (24a1, 24b1, 24c1) forming a tracing rule on the part (10).

9. The tooling (20) according to any one of the preceding claims, wherein the body has a generally curved shape and an angular extent of between 10 and 30° about an axis, which is configured to coincide with the axis (X) of the part (10).

10. A method for visually inspecting an aircraft turbomachine part (10) by means of the tooling (20) according to one of the preceding claims, the part (10) having an annular shape about an axis (X) and comprising an annular attachment flange (14) which is oriented in the radial direction with respect to the axis, the method comprising the steps consisting of:
a) positioning the body of the tooling (20) on the part (10) by mounting the hook (22) on the flange (14), the two lateral legs (22a, 22b) of the hook (22) being located respectively on the two sides of the flange (14), and
b) inspecting the part (10), and in particular the portion of the part (10) on which the body is mounted, this inspection step being carried out by an operator.

11. The method according to claim 10, wherein the part (10) is a trunnion which comprises a frusto-conical wall (12), and said flange (14) is directed radially towards the outside and located at the external periphery of the frusto-conical wall (12), the body of the tooling (20) being positioned in step a) so that its frame (24) is mounted on a portion of an external frusto-conical surface of that frusto-conical wall (12).

12. The method according to claim 10 or 11, wherein step b) comprises the sub-steps of:
- checking by the operator if there are any marks or wear on the part (10) which are hidden by the body of the tooling (20), and
- checking by the operator if there are any marks or wear visible through the window (30) of the tooling (20).

13. The method according to one of claims 10 to 12, the tooling (20) being of the type as defined in claim 9, wherein at least one line is drawn on the part (10) along one of the edges (24a1, 24b1) of the frame (24).

14. The method according to one of claims 10 to 13, wherein, after the steps a) and b), the method comprises a step c) of moving the body of the tooling (20) on the part (10), by rotating the body mounted on the part (10) about the axis (X) of the part, and then step b) of the method is repeated.

15. The method according to claim 14, wherein the steps b) and c) are repeated as many times as necessary so as to inspect the entire contour of the part (10).
